# EUROPEAN PATENT SPECIFICATION

(11) **EP 3 521 056 B1**
(45) Date of publication and mention of the grant of the patent: **23.06.2021**
(21) Application number: 19151127.8
(22) Date of filing: 10.01.2019
(51) Int. Cl.: B60C 1/00, C08L 9/00, C08L 47/00, C08L 93/00, C08K 3/36

(54) **RUBBER COMPOSITION FOR TIRE TREAD AND TIRE MANUFACTURED USING THE SAME**
KAUTSCHUKZUSAMMENSETZUNG FÜR REIFENLAUFFLÄCHEN UND DAMIT HERGESTELLTER REIFEN
COMPOSITION DE CAOUTCHOUC POUR CHAPES DE PNEUMATIQUES ET PNEUMATIQUE EN ÉTANT FABRIQUÉ

(30) Priority: 05.02.2018 KR 20180013802
(43) Date of publication of application: 07.08.2019
(73) Proprietor: Hankook Tire Co., Ltd., Seoul 135-723 (KR)
(72) Inventor: Jung, Jaehyun, 34127 Daejeon (KR); Chung, Haekwang, 34127 Daejeon (KR); Kang, Changhwan, 34127 Daejeon (KR)
(74) Representative: Petraz, Gilberto Luigi

(56) References cited:
- EP-A1- 2 468 815
- EP-A1- 2 835 386
- WO-A1-2017/046766
- WO-A1-2017/046771
- DATABASE WPI Week 201534 Thomson Scientific, London, GB; AN 2015-271382 XP002792225, & JP 2015 083649 A (TOYO RUBBER IND CO LTD) 30 April 2015 (2015-04-30)
- DATABASE WPI Week 201721 Thomson Scientific, London, GB; AN 2017-17797N XP002792226, & JP 2017 048336 A (AMYRIS INC) 9 March 2017 (2017-03-09)

## Description

### BACKGROUND OF THE INVENTION

### 1. Field of the Invention

The present invention relates to a rubber composition for tire tread, which simultaneously improves steering and braking performance on a wet road surface and an icy and snowy road surface and prevents a lamination cut-chip phenomenon, and a tire manufactured using this rubber composition.

### 2. Description of the Related Art

Recently, the amount of snowfall increases globally, and the regulations for obligatory installation of winter tires for the winter season have been fortified. Also, consumers' safety consciousness has been heightened. Therefore, the demand for winter tires is ever increasing.

The steering and braking performance on a wet road surface and an icy and snowy road surface, which are the performances most needed for safety during driving in the winter season, are in a trade-off relationship that cannot be easily balanced. In order to maintain steering and braking performance on a snowy road surface or an icy road surface, low hardness and low dynamic modulus of the rubber for tire tread are very important. In order to impart the two characteristics, relatively large quantities of process oils are incorporated into the tire tread rubber compositions for conventional all-season tires or winter tires.

In the case of all-season tires or winter tires, which use large quantities of process oils, the steering and braking performance on an icy and snowy road surface may be improved; however, there is a problem that the steering and braking performance on a relatively wet road surface are deteriorated. In order to address this problem, when a hydrocarbon resin having a high glass transition temperature (Tg) is used as a rubber compounding agent, the performance on a wet road surface can be enhanced; however, this time, performance deterioration on an icy and snowy surface occurs. Furthermore, in the early stage of use, the hardness and dynamic modulus of the rubber for tread are adequate, and excellent steering and braking performance are obtained. However, when the tire is used for a long time period, plasticizers are discharged out, and the hardness and dynamic modulus increase compared to those values obtainable in the early stage. Therefore, the performance is somewhat deteriorated compared to the early stage, or problems such as occurrence of the lamination cut-chip phenomenon occur.

Document WO-A-2017/046766 discloses known elastomeric compositions for tire components and tires thereof. Document WO-A-2017/046771 discloses known winter tires. Document EP-A-2468815 discloses a known reinforced rubber composition with combination of functionalized elastomer, liquid polymer and resin and tire with tread thereof. A know rubber composition is described in Database WPI, Week 201534, AN 2015-271382 & JP-A-2015083649. Another known rubber composition is described in Database WPI, Week 201721, AN 2017-17797N & JP-A-2017048336.

In order to overcome the problems of the prior art technologies such as described above, there is a demand to develop a technology for obtaining a rubber composition that can simultaneously improve the steering and braking performance on a wet road surface as well as an icy and snowy road surface and can prevent a lamination cut-chip phenomenon caused by discharge of plasticizers.

### SUMMARY OF THE INVENTION

An object of the present invention is to provide a rubber composition for tire tread that can simultaneously improve the steering and braking performance on a wet road surface as well as an icy and snowy surface and can prevent the occurrence of a lamination cut-chip phenomenon caused by discharge of plasticizers.

Another object of the invention is to provide a tire manufactured using the above-described rubber composition for tire tread.

According to one aspect of the present invention, there is provided a rubber composition for tire tread, the rubber composition comprising 100 parts by weight of a raw material rubber; 2 to 30 parts by weight of a liquid polymer containing double bonds in the main chain at a proportion of 10 mol% to 90 mol%; 2 to 30 parts by weight of a hydrocarbon resin; and 80 to 180 parts by weight of a reinforcing filler.

The liquid polymer is represented by the following Chemical Formula (1): 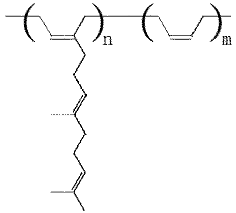 wherein in Chemical Formula (1), n represents an integer from 45 to 65, and m represents an integer from 31 to 51.

The raw material rubber may be a rubber selected from the group consisting of a styrene-butadiene rubber (SBR), a modified styrene-butadiene rubber, a butadiene rubber (BR), a modified butadiene rubber, a polybutadiene rubber, a polyisoprene rubber, a butyl rubber (BR), a chlorosulfonated polyethylene rubber, an epichlorohydrin rubber, a fluorine rubber, a silicone rubber, a nitrile rubber, a hydrogenated nitrile-butadiene rubber (hydrogenated NBR), a chlorinated polyethylene rubber, a styrene-ethylene-butylene-styrene (SEBS) rubber, an olefin rubber, an ethylene-propylene rubber, an ethylene-propylene-diene (EPDM) rubber, a maleic acid-ethylene-propylene rubber, an acrylic rubber, a halogenated rubber, a chloroprene rubber, an ethylene-vinyl acetate rubber, a vinyl-benzyl chloride-styrene-butadiene rubber, a bromomethyl-styrene-butyl rubber, a maleic acid-styrene-butadiene rubber, a carboxylic acid-styrene-butadiene rubber, an epoxy-isoprene rubber, a carboxylic acid-nitrile-butadiene rubber, a brominated polyisobutyl-isoprene-co-paramethyl styrene (BIMS), and combinations thereof.

The liquid polymer may be a polymer which has a glass transition temperature of -110°C to -70°C and a weight average molecular weight of 30,000 to 100,000 g/mol and is in a liquid form at a temperature in the range of -20°C to 50°C.

The hydrocarbon resin may be any one selected from the group consisting of a coumarone-indene resin, a terpene resin, a terpene-phenol resin, an aromatic modified terpene resin, a phenol-formaldehyde resin, an aliphatic C5 hydrocarbon resin, an aliphatic C7 hydrocarbon resin, an aromatic C7 hydrocarbon resin, an aliphatic C9 hydrocarbon resin, an aromatic C9 hydrocarbon resin, and copolymer resins thereof.

The reinforcing filler may include 10 to 40 parts by weight of carbon black and 40 to 170 parts by weight of silica with respect to 100 parts by weight of the raw material rubber.

The silica may be a precipitated silica having a CTAB adsorption specific surface area of 153 to 177 m²/g and a nitrogen adsorption specific surface area of 160 to 190 m²/g.

According to another aspect of the present invention, there is provided a tire manufactured using the rubber composition for tire tread described above.

The present invention can provide a rubber composition for tire tread, which simultaneously improves handling and braking performance on a wet road surface and an icy and snowy road surface and prevents a lamination cut-chip phenomenon caused by discharge of plasticizers.

The present invention can also provide a tire manufactured using the rubber composition for tire tread described above.

### DETAILED DESCRIPTION OF THE PREFERRED EMBODIMENTS

Hereinafter, the present invention will be described in more detail.

The rubber composition for tire tread according to an embodiment of the present invention comprises 100 parts by weight of a raw material rubber; 2 to 30 parts by weight of a liquid polymer containing double bonds in the main chain at a proportion of 10 mol% to 90 mol%; 2 to 30 parts by weight of a hydrocarbon resin; and 80 to 180 parts by weight of a reinforcing filler.

### (1) Raw material rubber

Specifically, the raw material rubber in the rubber composition may be any one selected from the group consisting of natural rubber, a synthetic rubber, and combinations thereof.

The natural rubber can be used without any particular limitations as long as the rubber has excellent tensile strength and friction resistance and is conventionally used in tire rubber compositions. Specifically, the natural rubber may be a general natural rubber or a modified natural rubber.

Regarding the general natural rubber, any material known as natural rubber can be used, and there are no limitations on the place of origin, or the like. The natural rubber contains cis-1,4-polyisoprene as a main component; however, the natural rubber may also contain trans-1,4-polyisoprene according to the demanded characteristics. Therefore, the natural rubber may also include, in addition to a natural rubber containing cis-1,4-polyisoprene as a main component, a natural rubber containing trans-1,4-polyisoprene as a main component, for example, balata, which is one kind of Sapota tree rubber produced in South America.

The modified natural rubber means a product obtained by modifying or purifying the above-described general natural rubber. Examples of the modified natural rubber include epoxylated natural rubber (ENR), deproteinated natural rubber (DPNR), and hydrogenated natural rubber.

The synthetic rubber may be selected from the group consisting of polybutadiene rubbers such as a styrene-butadiene rubber (SBR), a modified styrene-butadiene rubber, a butadiene rubber (BR), and a modified butadiene rubber; a polyisoprene rubber, a butyl rubber (BR), a chlorosulfonated polyethylene rubber, an epichlorohydrin rubber, a fluorine rubber, a silicone rubber, a nitrile rubber, a hydrogenated nitrile-butadiene rubber (hydrogenated NBR), a chlorinated polyethylene rubber, a styrene-ethylene-butylene-styrene (SEBS) rubber, an olefin rubber, an ethylene-propylene rubber, an ethylene-propylene-diene (EPDM) rubber, a maleic acid-ethylene-propylene rubber, a HYPALON rubber, an acrylic rubber, a halogenated rubber, a chloroprene rubber, an ethylene-vinyl acetate rubber, a HYDRIN rubber, a vinyl-benzyl chloride-styrene-butadiene rubber, a bromomethylstyrene-butyl rubber, a maleic acid-styrene-butadiene rubber, a carboxylic acid-styrene-butadiene rubber, an epoxy-isoprene rubber, a carboxylic acid-nitrile-butadiene rubber, a brominated polyisobutylene-isoprene-co-paramethylstyrene (BIMS), and combinations thereof. More preferably, the raw material rubber may be any one selected from the group consisting of a polybutadiene rubber, a polyisoprene rubber, a butyl rubber, a hydrogenated nitrile-butadiene rubber (hydrogenated NBR), an olefin rubber, a maleic acid-ethylene-propylene rubber, an acrylic rubber, a halogenated rubber, a chloroprene rubber, and mixtures thereof.

### (2) Liquid polymer

The liquid polymer in the rubber composition has a feature of containing double bonds in the polymer main chain. At the time of vulcanization, the liquid polymer and the raw material rubber are linked by crosslinking through the aforementioned double bonds, and due to this crosslinking, even in a case in which the rubber is aged or is repeatedly subjected to the action of an external force for a long time period, the extent to which the liquid polymer is discharged out of the rubber composition is markedly decreased. Therefore, the performances required from winter tires can be maintained for a long time.

The double bonds may be included at a proportion of 10 mol% to 90 mol% with respect to the total molar amount of the liquid polymer. The liquid polymer containing double bonds in the polymer main chain may be specifically any one selected from the group consisting of polymers having their polymer main chain formed from polyisoprene, polystyrene, polybutadiene, polystyrene-butadiene, and copolymers thereof.

The liquid polymer may further contain a farnesene structure in a polymer side chain.

In a case in which the liquid polymer contains a farnesene structure, bonding of the liquid polymer to the raw material rubber is enabled at the time of curing the rubber composition, and there is obtained an effect of maintaining elasticity at low temperature and thereby increasing the actual contact area between the tire and the road surface.

Furthermore, the liquid polymer containing double bonds in the polymer main chain may have a glass transition temperature of -110°C to - 70°C and a weight average molecular weight of 30,000 to 100,000 g/mol.

When the glass transition temperature is lower than -110°C, a problem of deterioration of the braking performance on a wet road surface may occur, and when the glass transition temperature is higher than -70°C, a problem of deterioration of the braking performance on an icy and snowy road surface may occur.

When the weight average molecular weight is less than 30,000 g/mol, the steering and braking performance on a wet road surface are deteriorated, and when the weight average molecular weight is more than 100,000 g/mol, the molecular movement of the liquid polymer is reduced, and the steering and braking performance on an icy and snowy road surface are deteriorated.

The liquid polymer maintains a liquid form at -20°C to 50°C, and having a liquid form is effective for enhancing the mixing processability of the rubber composition.

The liquid polymer is a compound represented by the following Chemical Formula (1): 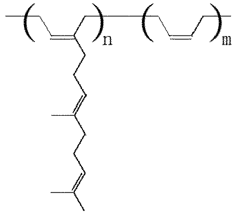 wherein in Chemical Formula (1), n represents an integer from 45 to 65; and m represents an integer from 31 to 51.

Furthermore, the liquid polymer containing double bonds in the polymer main chain may be included in an amount of 2 to 30 parts by weight, and preferably 5 to 30 parts by weight, with respect to 100 parts by weight of the raw material rubber.

When the liquid polymer is incorporated in an amount of less than 5 parts by weight, a problem that the elasticity maintaining effect caused by curing with the raw material rubber is deteriorated may occur. When the content of the liquid polymer is more than 30 parts by weight, a problem that the steering performance on a wet road surface is deteriorated may occur.

### (3) Hydrocarbon resin

The hydrocarbon resin in the rubber composition may be any one selected from the group consisting of a coumarone-indene resin, a terpene resin, a terpene-phenol resin, an aromatic modified terpene resin, a phenol-formaldehyde resin, an aliphatic C5 hydrocarbon resin, an aliphatic C7 hydrocarbon resin, an aromatic C7 hydrocarbon resin, an aliphatic C9 hydrocarbon resin, an aromatic C9 hydrocarbon resin, and copolymer resins thereof.

The hydrocarbon resin may be included in an amount of 2 to 30 parts by weight, and preferably 10 to 30 parts by weight, with respect to 100 parts by weight of the raw material rubber.

When the hydrocarbon resin is included in an amount of less than 10 parts by weight, a problem that the braking performance on a wet road surface is deteriorated may occur. When the content of the hydrocarbon resin is more than 30 parts by weight, a problem that the braking performance on an icy and snowy road surface is deteriorated may occur.

In a case in which the hydrocarbon resin is used in combination with the above-mentioned liquid polymer containing double bonds in the polymer main chain, the glass transition temperature of the rubber is increased while the elasticity at low temperature caused by curing between the liquid polymer and the raw material rubber is maintained. Thus, the steering and braking performance on a wet road surface and on an icy and snowy road surface can be enhanced simultaneously.

### (4) Reinforcing filler

The rubber composition for tire tread also includes carbon black and silica as reinforcing fillers. Specifically, it is preferable that the reinforcing fillers include 10 to 40 parts by weight of carbon black and 40 to 170 parts by weight of silica with respect to 100 parts by weight of the raw material rubber.

When the content of carbon black is less than 10 parts by weight, a problem that the reinforcing properties of the rubber composition is deteriorated may occur. When the content of carbon black is more than 40 parts by weight, the rubber has high hardness, and a problem that the braking performance on an icy and snowy road surface is deteriorated may occur.

When the content of silica is less than 40 parts by weight, a problem that the braking performance on a wet road surface is deteriorated may occur. When the content of silica is more than 170 parts by weight, a problem that the mixing processability of the rubber composition is deteriorated may occur.

At the time of mixing the reinforcing fillers including silica and carbon black with the raw material rubber, the reinforcing fillers may be mixed with the raw material before the liquid polymer and the hydrocarbon resin, and then the liquid polymer and the hydrocarbon resin may be incorporated in this order. Depending on the order of incorporation of the reinforcing fillers, the dispersity of the fillers in the raw material rubber can be increased.

### (4-1) Carbon black

Specifically, when a reinforcibility improving effect as well as a processability and air permeability improving effect are considered, the carbon black is more preferably a GPF (General Purpose Furnace) grade carbon black having a nitrogen adsorption specific surface area (nitrogen surface area per gram, N₂SA) of 30 to 40 m²/g and a DBP (n-dibutyl phthalate) oil absorption amount of 85 to 95 cc/100 g.

The nitrogen adsorption specific surface area and the DBP oil absorption amount of the carbon black are physical property requirements that should be simultaneously satisfied in combination. When the nitrogen adsorption specific surface area is less than 30 m²/g, there is a risk that the reinforcement performance provided by carbon black as a filler may become poor, and when the nitrogen adsorption specific surface area is more than 300 m²/g, there is a risk that the processability of the rubber composition for tire may become poor. Furthermore, when the DBP oil absorption amount of the carbon black is more than 180 cc/100 g, the processability of the rubber composition may be deteriorated, and when the DBP oil absorption amount is less than 60 cc/100 g, the reinforcement performance provided by carbon black as a filler may become poor.

### (4-2) Silica

Specifically, the silica may be precipitated silica, and may have a CTAB (cetyl trimethylammonium bromide) adsorption specific surface area of 153 to 177 m²/g or may have a nitrogen adsorption specific surface area of 160 to 190 m²/g.

When the CTAB adsorption specific surface area of the silica is less than 153 m²/g, there is a risk that the reinforcement performance provided by the silica as a filler may be deteriorated, and when the CTAB adsorption specific surface area is more than 177 m²/g, there is a risk that the processability of the rubber composition may be deteriorated. Furthermore, when the nitrogen adsorption specific surface area of the silica is less than 160 m²/g, there is a risk that the reinforcement performance by silica may be deteriorated, and when the nitrogen adsorption specific surface area is more than 190 m²/g, there is a risk that the processability of the rubber composition may be deteriorated.

For an enhancement of dispersibility of the silica, a coupling agent may be additionally incorporated.

Regarding the coupling agent, any one selected from the group consisting of a sulfide-based silane compound a mercapto-based silane compound, a vinyl-based silane compound, an amino-based silane compound, a glycidoxy-based silane compound, a nitro-based silane compound, a chloro-based silane compound, a methacrylic silane compound, and combinations thereof can be used, and a sulfide-based silane compound can be preferably used.

The sulfide-based silane compound may be any one selected from the group consisting of bis(3-triethoxysilylpropyl) tetrasulfide, bis(2-triethoxysilylethyl) tetrasulfide, bis(4-triethoxysilylbutyl) tetrasulfide, bis(3 -trimethoxysilylpropyl) tetrasulfide, bis(2-trimethoxysilylethyl) tetrasulfide, bis(4-trimethoxysilylbutyl) tetrasulfide, bis(3-triethoxysilylpropyl) trisulfide, bis(2-triethoxysilylethyl) trisulfide, bis(4-triethoxysilylbutyl) trisulfide, bis(3-trimethoxysilylpropyl) trisulfide, bis(2-trimethoxysilylethyl) trisulfide, bis(4-trimethoxysilylbutyl) trisulfide, bis(3-triethoxysilylpropyl) disulfide, bis(2-triethoxysilylethyl) disulfide, bis(4-triethoxysilylbutyl) disulfide, bis(3-trimehoxysilylpropyl) disulfide, bis(2-trimethoxysilylethyl) disulfide, bis(4-triethoxysilylbutyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropyl benzothiazolyl tetrasulfide, 3-triethoxysilylpropyl benzothiazole tetrasulfide, 3-trimethoxysilylpropyl methacrylate monosulfide, 3-triethoxysilylpropyl methacrylate monosulfide, and combinations thereof.

The mercaptosilane compound may be any one selected from the group consisting of 3-mercaptopropyltrimethoxysilane, 3-mercaptopropyltriethoxysilane, 2-mercaptoethyltrimethoxysilane, 2-mercaptoethyltriethoxysilane, and combinations thereof. The vinyl-based silane compound may be any one selected from the group consisting of ethoxysilane, vinyltrimethoxysilane, and combinations thereof. The amino-based silane compound may be any one selected from the group consisting of 3-aminopropyltriethoxysilane, 3-aminopropyltrimethoxysilane, 3-(2-aminoethyl)aminopropyltriethoxysilane, 3-(2-aminoethyl)aminopropyltrimethoxysilane, and combinations thereof.

The glycidoxy-based silane compound may be any one selected from the group consisting of γ-glycidoxypropyltriethoxysilane, γ-glycidoxypropyltrimethoxysilane, γ-glycidoxypropylmethyldiethoxysilane, γ-glycidoxypropylmethyldimethoxysilane, and combinations thereof. The nitro-based silane compound may be any one selected from the group consisting of 3-nitropropyltrimethoxysilane, 3-nitropropyltriethoxysilane, and combinations thereof. The chloro-based silane compound may be any one selected from the group consisting of 3-chloropropyltrimethoxysilane, 3-chloropropyltriethoxysilane, 2-chloroethyltrimethoxysilane, 2-chloroethyltriethoxysilane, and combinations thereof.

The methacrylic silane compound may be any one selected from the group consisting of γ-methacryloxypropyltrimethoxysilane, γ-methacryloxypropylmethyldimethoxysilane, γ-methacryloxypropyldimethylmethoxysilane, and combinations thereof.

The coupling agent may be included in an amount of 1 to 20 parts by weight with respect to 100 parts by weight of the raw material rubber. When the content of the coupling agent is less than 1 part by weight, the enhancement of dipersibility of the silica is insufficient, and the processability of rubber may be deteriorated, or the low fuel consumption performance may be deteriorated. When the content is more than 20 parts by weight, the interaction between silica and rubber becomes so strong that the low fuel consumption performance may be excellent, but the braking performance may be significantly deteriorated.

### (5) Other additives

The tire rubber composition may optionally include various additional additives such as a vulcanizer, a vulcanization accelerator, an aging inhibitor, an activating agent, and a softening agent. Regarding the various additives, any additives can be used as long as they are conventionally used in the field to which the present invention is pertained, and the contents of these additives are not particularly limited as long as the contents are based on the mixing ratios used in conventional rubber compositions for tires.

Regarding the vulcanizer, a sulfur-based vulcanizer, an organic peroxide, a resin vulcanizer, or a metal oxide such as magnesium oxide can be used.

Examples of the sulfur-based vulcanizer that can be used include inorganic vulcanizers such as powdered sulfur (S), insoluble sulfur (S), precipitated sulfur (S), and colloidal sulfur; and organic vulcanizers such as tetramethylthiuram disulfide (TMTD), tetraethylthiuram disulfide (TETD), and dithiodimorpholine. Regarding the sulfur-based vulcanizer, specifically, elemental sulfur or a sulfurizing agent that produces sulfur, for example, amine disulfide or polymeric sulfur can be used.

Regarding the organic peroxide, any one selected from the group consisting of benzoyl peroxide, dicumyl peroxide, di-t-butyl peroxide, t-butyl cumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexyne-3, 1,3-bi(t-butylperoxypropyl)benzene, di-t-butylperoxy-diisopropylbenzene, t-butylperoxybenzene, 2,4-dichlorobenzoyl peroxide, 1,1-dibutylperoxy-3,3,5-trimethylsiloxane, n-butyl-4,4-di-t-butyl peroxyvalerate, and combinations thereof can be used.

It is preferable that the vulcanizer is incorporated in an amount of 1.5 to 2.5 parts by weight with respect to 100 parts by weight of the raw material rubber, from the viewpoint that an appropriate vulcanization effect makes the raw material rubber chemically stable and less sensitive to heat.

The vulcanization accelerator means an accelerator that accelerates the rate of sulfurization or accelerates a delaying action in the initial sulfurization stage.

Regarding the vulcanization accelerator, any one selected from the group consisting of a sulfenamide-based agent, a thiazole-based agent, a thiuram-based agent, a thiourea-based agent, a guanidine-based agent, a dithiocarbamic acid-based agent, an aldehyde-amine-based agent, an aldehyde-ammonia-based agent, an imidazoline-based agent, a xanthate-based agent, and combinations thereof can be used.

Regarding the sulfenamide-based vulcanization accelerator, any one sulfenamide-based compound selected from the group consisting of, for example, N-cyclohexyl-2-benzothiazyl sulfenamide (CBS), N-tert-butyl-2-benzothiazyl sulfenamide (TBBS), N,N-dicyclohexyl-2-benzothiazyl sulfenamide, N-oxydiethylene-2-benzothiazyl sulfenamide, N,N-diisopropyl-2-benzothiazole sufenamide, and combinations thereof can be used.

Regarding the thiazole-based vulcanization accelerator, any one thiazole-based compound selected from the group consisting of, for example, 2-mercaptobenzothiazole (MBT), dibenzothiazyl disulfide (MBTS), sodium salt of 2-mercaptobenzothiazole, zinc salt of 2-mercaptobenzothiazole, copper salt of 2-mercaptobenzothiazole, cyclohexylamine salt of 2-mercaptobenzothiazole, 2-(2,4-dinitrophenyl)mercaptobenzothiazole, 2-(2,6-diethyl-4-morpholinothio)benzothiazole, and combinations thereof can be used.

Regarding the thiuram-based vulcanization accelerator, for example, any one thiuram-based compound selected from the group consisting of tetramethylthiuram disulfide (TMTD), tetraethylthiuram disulfide, tetramethylthiuram monosulfide, dipentamethylthiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and combinations thereof can be used.

Regarding the thiourea-based vulcanization accelerator, for example, any one thiourea-based compound selected from the group consisting of thiacarbamide, dimethylthiourea, dibutylthiourea, trimethylthiourea, di-ortho-tolylthiourea, and combinations thereof can be used.

Regarding the guanidine-based vulcanization accelerator, for example, any one guanidine-based compound elected from the group consisting of diphenylguanidine, di-ortho-tolylguanidine, triphenylguanidine, ortho-tolylbiguanide, diphenylguanidine phthalate, and combinations thereof can be used.

Regarding the dithiocarbamic acid-based vulcanization accelerator, for example, any one dithiocarbamic acid-based compound selected from the group consisting of zinc ethylphenyldithiocarbamate, zinc butylphenyldithiocarbamate, sodium dimethyldithiocarbamate zinc dimethyldithiocarbamate, zinc diethyldithiocarbamate, zinc dibutyldithiocarbamate, zinc diamyldithiocarbamate, zinc dipropyldithiocarbamate, complex salt of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate, selenium dimethyldithiocarbamate tellurium diethyldithiocarbamate, cadmium diamyldithiocarbamate, and combinations thereof can be used.

Regarding the aldehyde-amine-based or aldehyde-ammonia-based vulcanization accelerator, for example, an aldehyde-amine-based or aldehyde-ammonia-based compound selected from the group consisting of acetaldehyde-aniline reaction product, butylaldehyde-aniline condensation product, hexamethylenetetramine, acetaldehyde-ammonia reaction product, and combinations thereof can be used.

Regarding the imidazoline-based vulcanization accelerator, for example, an imidazoline-based compound such as 2-mercaptoimidazoline can be used, and regarding the xanthate-based vulcanization accelerator, for example, a xanthate-based compound such as zinc dibutylxanthogenate can be used.

The vulcanization accelerator may be incorporated in an amount of 0.5 to 2.0 parts by weight with respect to 100 parts by weight of the raw material rubber, in order to increase the productivity through acceleration of the rate of vulcanization and to enhance the rubber physical properties.

A vulcanization acceleration aid is a mixing agent that is used in combination with the vulcanization accelerator in order to make the acceleration effect more effectively achieved. Any one selected from the group consisting of an inorganic vulcanization acceleration aid, an organic vulcanization acceleration aid, and combinations thereof can be used.

Regarding the inorganic vulcanization acceleration aid, any one selected from the group consisting of zinc oxide (ZnO), zinc carbonate, magnesium oxide (MgO), lead oxide, potassium hydroxide, and combinations thereof can be used. Regarding the organic vulcanization acceleration aid, any one selected from the group consisting of stearic acid, zinc stearate, palmitic acid, linoleic acid, oleic acid, lauric acid, dibutylammonium oleate, derivatives thereof, and combinations thereof can be used.

Particularly, zinc oxide and stearic acid can be used together as the vulcanization acceleration aids, and in this case, zinc oxide dissolves in stearic acid and forms a complex effective for the vulcanization accelerator. This complex produces free sulfur during a vulcanization reaction, and thereby facilitates a crosslinking reaction of rubber.

In the case of using zinc oxide and stearic acid together, the compounds can be used respectively in an amount of 0.8 to 2.0 parts by weight with respect to 100 parts by weight of the raw material rubber, so that the compounds appropriately play the roles as vulcanization acceleration aids.

The aging inhibitor is an additive used for terminating a chain reaction by which a tire is automatically oxidized by oxygen. Regarding the aging inhibitor, any one selected from the group consisting of an amine-based agent, a phenolic agent, a quinoline-based agent, an imidazole-based agent, a carbamic acid metal salt, a wax, and combinations thereof can be appropriately selected and used.

Regarding the amine-based aging inhibitor, any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-pheny-N'-octyl-p-phenylenediamine, and combinations thereof can be used. Regarding the phenolic aging inhibitor, any one selected from the group consisting of phenolic compounds such as 2,2'-methylene-bis(4-methyl-6-tert-butylphenol), 2,2'-isobutylidene-bis(4,6-dimethylphenol), 2,6-di-t-butyl-p-cresol, and combinations thereof can be used. Regarding the quinoline-based aging inhibitor, any one selected from the group consisting of 2,2,4-trimethyl-1,2-dihydroquinoline and derivatives thereof can be used, and specifically, any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and combinations thereof can be used. Regarding the wax, a waxy hydrocarbon can be preferably used.

In the light of conditions such as that in addition to the aging inhibitory action, the aging inhibitor should have high solubility in rubber, the aging inhibitor should be less volatile and inert to rubber, and the aging inhibitor should not inhibit vulcanization, the aging inhibitor may be incorporated in an amount of 1 to 5 parts by weight with respect to 100 parts by weight of the raw material rubber.

The softening agent is added to a rubber composition in order to impart plasticity to rubber and thereby facilitating processing, or in order to decrease the hardness of vulcanized rubber, and the softening agent means an oily material that is used at the time of mixing a rubber composition or at the time of producing rubber. The softening agent means a process oil or other oil that is included in a rubber composition. Regarding the softening agent, any one selected from the group consisting of a petroleum-based oil, plant oils and fats, and combinations thereof can be used; however, the present invention is not limited to this.

Regarding the petroleum-based oil, any one selected from the group consisting of a paraffin-based oil, a naphthene-based oil, an aromatic oil, and combinations thereof can be used.

Representative examples of the paraffinic oil include P-1, P-2, P-3, P-4, P-5, and P-6 manufactured by Michang Oil Industry Co., Ltd., and representative examples of the naphthenic oil include N-1, N-2, and N-3 manufactured by Michang Oil Industry Co., Ltd. Representative examples of the aromatic oil include A-2 and A-3 manufactured by Michang Oil Industry Co., Ltd.

However, along with the recent heightening of environmental awareness, it is known that when the content of polycyclic aromatic hydrocarbons (hereinafter, referred to as "PAHs") included in the aromatic oil is 3% by weight or more, the possibility for oncogenesis is high. Therefore, a treated distillate aromatic extract (TDAE) oil, a mild extraction solvate (MES) oil, a residual aromatic extract (RAE) oil, or a heavy naphthenic oil can be preferably used.

Particularly, regarding the oil used as the softening agent, a TDAE oil having a total content of PAH components of 3% by weight or less with respect to the total amount of oils and a dynamic viscosity of 95 or higher (210°F SUS), and having a content of aromatic components of 15% to 25% by weight, a content of naphthenic components of 27% to 37% by weight, and a content of paraffinic components 38% to 58% by weight in the softening agent can be preferably used.

The TDAE oil makes the low temperature characteristics and fuel consumption performance of a tire tread including the TDAE oil superior, and also has advantageous characteristics for environmental factors such as the possibility for oncogenesis of PAH's.

Regarding the plant oils and fats, any one selected from the group consisting of castor oil, cotton seed oil, linseed oil, canola oil, soybean oil, palm oil, coconut oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, safflower oil, tung oil, and combinations thereof can be used.

The rubber composition for tire tread can be produced through a conventional two-stage continuous production process. That is, the rubber composition for tire tread can be produced in an appropriate mixing machine using step 1 of performing a thermomechanical treatment or kneading at a maximum temperature of from 110°C to 190°C, and preferably a high temperature of 130°C to 180°C (referred to as "non-production" step); and step 2 of performing a mechanical treatment typically at a low temperature below 110°C, for example, 40°C to 100°C, during a finishing step of mixing the crosslinked system (referred to as "production" step); however, the present invention is not intended to be limited to this.

A tire according to another embodiment of the present invention comprises a tread part produced using the rubber composition for tire tread described above.

Regarding the method for manufacturing a tire including a tread part using the rubber composition for tire tread described above, any conventional method used for the manufacture of tire can be applied, and further detailed explanation will not be repeated in the present specification.

The tire may be a tire for a small-sized truck (LTR) or a tire for a passenger car; however, the use application is not limited to this.

Hereinafter, Examples of the present invention will be described in detail so that a person having ordinary skill in the technical field to which the present invention is pertained, can easily carry out the invention. However, the present invention can be embodied in various different forms and is not limited to the Examples described herein.

### [Production Example: Production of rubber composition]

Rubber compositions for tire tread according to the following Examples and Comparative Examples were produced using the compositions described in the following Table 1. The production of the rubber compositions was carried out according to a conventional method for producing a rubber composition and is not particularly limited.

**Table 1]**

| | Comparativ e Example 1 | Comparativ e Example 2 | Comparativ e Example 3 | Comparativ e Example 4 | Example 1 |
|---|---|---|---|---|---|
| Raw material rubber (1) | 100 | 100 | 100 | 100 | 100 |
| Carbon black (2) | 20 | 20 | 20 | 20 | 20 |
| Silica (3) | 100 | 100 | 100 | 100 | 100 |
| Liquid polymer 1 (4) | - | 10 | - | - | 10 |
| Liquid polymer 2 (5) | - | - | 10 | - | - |
| Hydrocarbon resin (6) | - | - | - | 20 | 20 |
| Zinc oxide (7) | 3 | 3 | 3 | 3 | 3 |
| Stearic acid (8) | 1 | 1 | 1 | 1 | 1 |
| Aging inhibitor (9) | 2 | 2 | 2 | 2 | 2 |
| Process oil (10) | 50 | 40 | 30 | 20 | 10 |
| Sulfur (11) | 1.5 | 1.5 | 1.5 | 1.5 | 1.5 |
| Accelerator (12) | 1 | 1 | 1 | 1 | 1 |

| | | | | | |
|---|---|---|---|---|---|
| Unit: parts by weight | | | | | |

(1) Raw material rubber: polyisoprene rubber
(2) Carbon black: a carbon black produced by a furnace method and having an iodine adsorption value of 121 mg/g and a DBP oil absorption amount of 119 cc/100 g
(3) Silica: a precipitated silica having a CTAB adsorption specific surface area of 165 m²/g and a nitrogen adsorption specific surface area of 170 m²/g
(4) Liquid polymer 1: a liquid polymer represented by Chemical Formula (1), having a glass transition temperature of -80°C and a molecular weight of 90,000 g/mol, and having a main chain with a butadiene structure and a side chain with a farnesene structure: 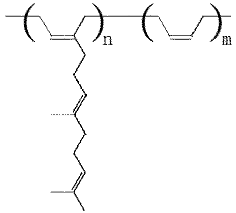 wherein n = 55, and m = 41.
(5) Liquid polymer 2: a liquid polymer having a main chain with a butadiene structure and having a molecular weight of 8,000 g/mol.
(6) Hydrocarbon resin: an aromatic modified terpene resin
(7) Process oil: TDAE (Treated Distillate Aromatic Extract) oil
(8) Accelerator: CBZ (CZ, N-cyclohexyl-2-benzothiazole sulfenamide)

### [Experiment Example: Measurement of physical properties of rubber compositions produced]

Tires having a tread part formed using the rubber compositions produced in the above-described Examples and Comparative Examples were demounted, and their physical properties were measured. The results are presented in the following Table 2.

**Table 2]**

| Item | Comparativ e Example 1 | Comparativ e Example 2 | Comparativ e Example 3 | Comparativ e Example 4 | Example 1 |
|---|---|---|---|---|---|
| Mooney viscosity (day of mixing, 100°C) | 60 | 70 | 65 | 65 | 75 |
| Tmax (150°C) | 19.4 | 20.3 | 19 | 19.8 | 21.6 |
| t90 (150°C) | 13.5 | 14.1 | 14.1 | 14.3 | 14.5 |
| Hardness (Shore A) | 65 | 66 | 65 | 65 | 66 |
| 300% Modulus (kgf/cm²) | 70 | 75 | 65 | 65 | 72 |
| 0°C tanδ | 0.19 | 0.185 | 0.179 | 0.211 | 0.212 |
| -30° G'(10E+7) | 10 | 8 | 8 | 16 | 10 |
| -30°C G'(10E+7) (after aging) | 15 | 11 | 13 | 21 | 13 |
| -30°C G'(10E+7) (after compression) | 20 | 13 | 15 | 28 | 15 |
| 60°C tanδ | 0.15 | 0.138 | 0.165 | 0.165 | 0.151 |

- Mooney viscosity (ML1+4 (100°C)) was measured according to ASTM standards D1646.
- Hardness was measured according to DIN 53505.
- The 300% modulus was measured according to ISO 37 standards.
- Viscoelasticity was determined by measuring G', G", and tan δ using an ARES measurement apparatus over a temperature range of from - 60°C to 60°C at a frequency of 10 Hz and a 5% strain.
- Aging was implemented for 48 hours at 100°C.
- A compression test was carried out by pressing a specimen having a size of 15 cm × 15 cm and a thickness of 2 mm under a load of 1 kg for 20 days.

In Table 2 shown above, the Mooney viscosity is a value representing the viscosity of unvulcanized rubber, and a smaller value means superior processability of unvulcanized rubber. The 0°C tan δ value represents the braking characteristics on a dry road surface or a wet road surface, and a larger value means superior braking performance. The -30°C G' value represents the braking characteristic on an icy and snowy road surface, and a smaller value means superior braking characteristics. Furthermore, the 60°C tan δ value represents the rolling resistance characteristics, and a smaller value means superior performance.

According to Table 2, in Comparative Example 2 and Comparative Example 3 in which liquid polymers were applied, the -30°C dynamic modulus G' value was decreased, while the 0°C tan δ value was decreased to a negligible extent, as compared to Comparative Example 1 that included neither a liquid polymer nor a hydrocarbon resin.

In Comparative Example 4 in which a hydrocarbon resin was applied, the 0°C tan δ value was increased compared to Comparative Example 1 as a control. Thus, it can be expected to have enhanced performance on a wet road surface. However, the -30°C dynamic modulus G' value was increased, and therefore, it was found that this Comparative Example would exhibit disadvantageous braking performance on an icy and snowy road surface.

It was found that in Example 1 in which a hydrocarbon resin and a liquid polymer were applied in combination, the 0°C tan δ was increased while the -30°C dynamic modulus G' and the 60°C tan δ were maintained at equal levels, as compared to Comparative Example 1.

Furthermore, the -30°C dynamic modulus G' values after aging and compression were increased to about 1.5 to 2 times the original values in Comparative Example 1. However, in Comparative Examples 2 to 4 and Example 1, the values were increased only to a relatively low extent. Thus, it was expected that deterioration of the winter tire performance after aging would occur to a low extent.

Tire treads were produced using the rubbers of the above-described Comparative Examples and Examples, and tires having the standard size 225/55R17 and including the aforementioned treads as half-finished products were produced. The relative ratios of the braking distance performance on a wet road surface and an icy and snowy road surface, and the tire hardness values after driving for a long time with regard to the tires are presented in Table 3. In regard to the relative ratio value, a change width of 5% or more implies that the influence on the increase or decrease in the performance is significant. That is, when the relative ratio value is 95 or less, the performance is insufficient, and the tire is not likely to be applicable to actual use. When the relative ratio value is 105 or larger, the performance enhancing effect is significantly satisfactory. An evaluation of lamination cut-chip is a test for evaluating the presence or absence of the occurrence of cut-chip at the tire tread surface after driving for a long time under aging and severe conditions.

**Table 3]**

| | Comparati ve Example 1 | Comparati ve Example 2 | Comparati ve Example 3 | Comparati ve Example 4 | Example 1 |
|---|---|---|---|---|---|
| Braking performance on wet road surface | 100 | 98 | 95 | 105 | 106 |
| Braking performance on icy and snowy road surface | 100 | 104 | 106 | 90 | 105 |
| Hardness | 65 | 66 | 65 | 65 | 66 |
| Hardness (after driving 30,000 km) | 75 | 69 | 68 | 75 | 69 |
| Evaluation of lamination cut-chip | Occurred | Not occurred | Occurred | Occurred | Not occurred |

As can be seen from Table 3 given above, it could be confirmed that Example 1 in which a hydrocarbon resin and a liquid polymer were applied in combination exhibited significantly excellent effects on the braking performance on a wet road surface as well as on the braking performance on an icy and snowy road surface, compared to Comparative Example 1. It was also confirmed that there was no noticeable change in the hardness even after 30,000-km driving. Also, in the evaluation of lamination cut-chip, cut-chip did not occur.

Thus, preferred embodiments of the present invention have been explained in detail; however, the scope of the present invention is not intended to be limited to these embodiments, and various modifications and improvements made by those having ordinary skill in the art by utilizing the basic concept of the present invention as defined in the following claims are also included in the scope of the present invention.

## Claims

1. A rubber composition for tire tread, the composition comprising:
100 parts by weight of a raw material rubber;
2 to 30 parts by weight of a liquid polymer containing double bonds in the main chain at a proportion of 10 mol% to 90 mol%;
2 to 30 parts by weight of a hydrocarbon resin; and
80 to 180 parts by weight of a reinforcing filler,
wherein the liquid polymer is represented by the following Chemical Formula (1): 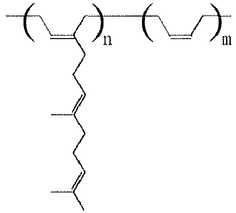 wherein in Chemical Formula (1), n represents an integer from 45 to 65; and m represents an integer from 31 to 51.

2. The rubber composition for tire tread according to claim 1, wherein the raw material rubber is selected from the group consisting of a styrene-butadiene rubber (SBR), a modified styrene-butadiene rubber, a butadiene rubber (BR), a modified butadiene rubber, a polybutadiene rubber, a polyisoprene rubber, a butyl rubber (BR), a chlorosulfonated polyethylene rubber, an epichlorohydrin rubber, a fluorine rubber, a silicone rubber, a nitrile rubber, a hydrogenated nitrile-butadiene rubber (hydrogenated NBR), a chlorinated polyethylene rubber, a styrene-ethylene-butylene-styrene (SEBS) rubber, an olefin rubber, an ethylene-propylene rubber, an ethylene-propylene-diene (EPDM) rubber, a maleic acid-ethylene-propylene rubber, an acrylic rubber, a halogenated rubber, a chloroprene rubber, an ethylene-vinyl acetate rubber, a vinyl-benzyl chloride-styrene-butadiene rubber, a bromomethylstyrene-butyl rubber, a maleic acid-styrene-butadiene rubber, a carboxylic acid-styrene-butadiene rubber, an epoxy-isoprene rubber, a carboxlic acid-nitrile-butadiene rubber, a brominated polyisobutyl-isoprene-co-paramethyl styrene (BIMS), and combinations thereof.

3. The rubber composition for tire tread according to claim 1, wherein the liquid polymer has a glass transition temperature of -110°C to -70°C and a weight average molecular weight of 30,000 to 100,000 g/mol, and the liquid polymer is in a liquid form at a temperature of -20°C to 50°C.

4. The rubber composition for tire tread according to claim 1, wherein the hydrocarbon resin is any one selected from the group consisting of a coumarone-indene resin, a terpene resin, a terpene-phenol resin, an aromatic modified terpene resin, a phenol-formaldehyde resin, an aliphatic C5 hydrocarbon resin, an aliphatic C7 hydrocarbon resin, an aromatic C7 hydrocarbon resin, an aliphatic C9 hydrocarbon resin, an aromatic C9 hydrocarbon resin, and copolymer resins thereof.

5. The rubber composition for tire tread according to claim 1, wherein the reinforcing filler includes 10 to 40 parts by weight of carbon black and 40 to 170 parts by weight of silica with respect to 100 parts by weight of the raw material rubber.

6. The rubber composition for tire tread according to claim 5, wherein the silica is a precipitated silica having a CTAB adsorption specific surface area of 153 to 177 m²/g and a nitrogen adsorption specific surface area of 160 to 190 m²/g.

7. A tire manufactured using the rubber composition for tire tread according to any one of claims 1 to 6.

## Patentansprüche

1. Kautschukzusammensetzung für eine Reifenlauffläche, wobei die Zusammensetzung
100 Gewichtsteile eines Rohstoffkautschuks,
2 bis 30 Gewichtsteile eines flüssigen Polymers mit Doppelbindungen in der Hauptkette in einem Anteil von 10 mol% bis 90 mol%,
2 bis 30 Gewichtsteile eines Kohlenwasserstoffharzes und
80 bis 180 Gewichtsteile eines Verstärkungsfüllstoffs aufweist,
wobei das flüssige Polymer durch die folgende chemische Formel (I) 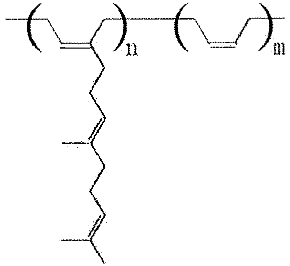
wiedergegeben ist, wobei in der chemischen Formel (I) n für eine ganze Zahl von 45 bis 65 und m für eine ganze Zahl von 31 bis 51 steht.

2. Die Kautschukzusammensetzung für eine Reifenlauffläche nach Anspruch 1, wobei der Rohkautschukkautschuk aus der Gruppe bestehend aus einem Styrol-Butadien-Kautschuk (SBR), einem modifizierten Styrol-Butadien-Kautschuk, einem Butadien-Kautschuk (BR), einem modifizierten Butadien-Kautschuk, einem Polybutadien-Kautschuk, einem Polyisopren-Kautschuk, einem Butylkautschuk (BR), einem chlorsulfonierten Polyethylen-Kautschuk, einem Epichlorhydrin-Kautschuk, einem Fluorkautschuk, einem Silikonkautschuk, einem Nitril-Kautschuk, einem hydrierten Nitril-Butadien-Kautschuk (hydriertes NBR), einem chlorierten Polyethylen-Kautschuk, einem Styrol-Ethylen-Butylen-Styrol- (SEBS) Kautschuk, einem Olefin-Kautschuk, einem Ethylen-Propylen-Kautschuk, einem Ethylen-Propylen-Diem- (EPDM) Kautschuk, einem MaleinSäure-Ethylen-Propylen-Kautschuk, einem Acrylkautschuk, einem halogenierten Kautschuk, einem Chloropren-Kautschuk, einem EthylenVinylacetat-Kautschuk, einem Vinyl-Benzylchlorid-Styrol-Butadien-Kautschuk, einem Brommethylstyrol-Butyl-Kautschuk, einem Maleinsäure-Styrol-Butadien-Kautschuk, einem Carbonsäure-Styrol-Butadien-Kautschuk, einem Epoxy-Isopren-Kautschuk, einem Carbonsäure-Nitril-Butadien-Kautschuk, ein bromiertes Polyisobutyl-Isopren-Co-Paramethylstyrol (BIMS) und Kombinationen davon ausgewählt ist.

3. Kautschukzusammensetzung für eine Reifenlauffläche nach Anspruch 1, wobei das flüssige Polymer eine Glasübergangstemperatur von -110°C bis -70°C und ein bezüglich des Gewichts gemitteltes Molekulargewicht von 30.000 bis 100.000 g/mol aufweist und das flüssige Polymer bei einer Temperatur von -20°C bis 50°C in flüssiger Form vorliegt.

4. Kautschukzusammensetzung für eine Reifenlauffläche nach Anspruch 1, wobei das Kohlenwasserstoffharz ein Harz ist, das wahlfrei aus der Gruppe bestehend aus einem Cumaron-Inden-Harz, einem Terpenharz, einem Terpenphenolharz, einem aromatisch modifizierten Terpenharz, einem Phenol-Formaldehyd-Harz, einem aliphatischen C5-Kohlenwasserstoffharz, einem aliphatischen C7-Kohlenwasserstoffharz, einem aromatischen C7-Kohlenwasserstoffharz, einem aliphatischen C9-Kohlenwasserstoffharz, einem aromatischen C9-Kohlenwasserstoffharz und Copolymerharzen davon ausgewählt ist.

5. Kautschukzusammensetzung für eine Reifenlauffläche nach Anspruch 1, **dadurch gekennzeichnet, dass** der Verstärkungsfüllstoff 10 bis 40 Gewichtsteile Russ und 40 bis 170 Gewichtsteile Kieselsäure bezogen auf 100 Gewichtsteile des Rohstoffkautschuks enthält.

6. Kautschukzusammensetzung für eine Reifenlauffläche nach Anspruch 5, **dadurch gekennzeichnet, dass** die Kieselsäure eine Fällungskieselsäure mit einer CTABadsorptionsspezifischen Oberfläche von 153 bis 177 m2/g und einer stickstoffadsorptionsspezifischen Oberfläche von 160 bis 190 m2/g ist.

7. Reifen, hergestellt unter Verwendung der Kautschukzusammensetzung für eine Reifenlauffläche nach einem der Ansprüche 1 bis 6.

## Revendications

1. Composition de caoutchouc pour une bande de roulement, la composition comprenant :
100 parties en poids d'une matière première en caoutchouc ;
de 2 à 30 parties en poids d'un polymère liquide contenant des doubles liaisons dans la chaîne principale à raison de 10% à 90% en moles ;
de 2 à 30 parties en poids d'une résine d'hydrocarbure ; et
de 80 à 180 parties en poids d'une charge renforçante,
où le polymère liquide est représenté par la formule chimique suivante (1) : 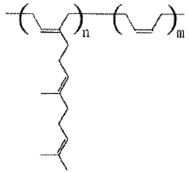
où dans la formule chimique (1), n représente un nombre entier de 45 à 65 ; et m représente un nombre entier de 31 à 51.

2. Composition de caoutchouc pour bande de roulement selon la revendication 1, où le caoutchouc de matière première est choisi dans le groupe constitué par un caoutchouc styrène-butadiène (SBR), d'un caoutchouc styrène-butadiène modifié, d'un caoutchouc butadiène (BR), d'un caoutchouc butadiène modifié, d'un caoutchouc polybutadiène, d'un caoutchouc polyisoprène, d'un caoutchouc butyle (BR), d'un caoutchouc polyéthylène chlorosulfoné, d'un caoutchouc épichlorhydrine, d'un caoutchouc fluoré, d'un caoutchouc silicone, d'un caoutchouc nitrile, d'un caoutchouc nitrile-butadiène hydrogéné (NBR hydrogéné), d'un caoutchouc polyéthylène chloré, d'un caoutchouc styrène-éthylène-butylène-styrène (SEBS), d'un caoutchouc oléfine, d'un caoutchouc éthylène-propylène, d'un caoutchouc éthylène-propylène-diène (EPDM), d'un caoutchouc éthylène-propylène d'acide maléique, d'un caoutchouc acrylique, d'un caoutchouc halogéné, d'un caoutchouc chloroprène, d'un caoutchouc éthylène-acétate de vinyle, d'un caoutchouc chlorure de vinyl-benzyle-styrène-butadiène, d'un caoutchouc bromométhylstyrène-butyle, d'un caoutchouc styrène-butadiène d'acide maléique, d'un caoutchouc styrène-butadiène d'acide carboxylique, d'un caoutchouc époxy-isoprène, d'un caoutchouc nitrile-butadiène d'acide carboxylique, d'un caoutchouc polyisoprène-isoprène-styrène bromé (BIMS) et de combinaisons de ceux-ci.

3. Composition de caoutchouc pour bande de roulement selon la revendication 1, où le polymère liquide a une température de transition vitreuse de -110°C à -70°C et un poids moléculaire moyen en poids de 30 000 à 100 000 g/mol, et le polymère liquide est sous une forme liquide à une température de -20°C à 50°C.

4. Composition de caoutchouc pour bande de roulement selon la revendication 1, où la résine d'hydrocarbure est l'une quelconque choisie dans le groupe constitué par une résine coumarone-indène, une résine terpénique, une résine terpène-phénol, une résine terpénique modifiée aromatique, une résine phénol-formaldéhyde, une résine d'hydrocarbure C5 aliphatique, une résine d'hydrocarbure C7 aliphatique, une résine d'hydrocarbure C7 aromatique, une résine d'hydrocarbure C9 aliphatique, une résine d'hydrocarbure C9 aromatique, et des résines copolymères de celles-ci.

5. Composition de caoutchouc pour bande de roulement selon la revendication 1, où la charge renforçante comprend de 10 à 40 parties en poids de noir de carbone et de 40 à 170 parties en poids de silice par rapport à 100 parties en poids de la matière première en caoutchouc.

6. Composition de caoutchouc pour bande de roulement selon la revendication 5, où la silice est une silice précipitée ayant une surface spécifique d'adsorption CTAB de 153 à 177 m²/g et une surface spécifique d'adsorption d'azote de 160 à 190 m²/g.

7. Pneumatique fabriqué en utilisant la composition de caoutchouc pour la bande de roulement selon l'une quelconque des revendications 1 à 6.
